# EUROPEAN PATENT SPECIFICATION

(11) **EP 1 540 386 B1**
(45) Date of publication and mention of the grant of the patent: **20.06.2012**
(21) Application number: 03764267.5
(22) Date of filing: 02.07.2003
(51) Int. Cl.: G02B 23/08

(54) **OPTICAL DEVICE with filter assembly**
OPTISCHE EINRICHTUNG mit filtereinrichtung
DISPOSITIF OPTIQUE comprenant un dispositif à filtres

(30) Priority: 12.07.2002 SE 0202191
(43) Date of publication of application: 15.06.2005
(73) Proprietor: SAAB AB, 581 88 Linköping (SE)
(72) Inventor: LUDWIGS, Henrik, S-114 57 Stockholm (SE); STALFORS, Martin, S-16244 VALLINGBY (SE)
(74) Representative: Norberg, Charlotte
(86) International application number: PCT/SE2003/001150
(87) International publication number: WO 2004/008194

(56) References cited:
- US-A- 4 279 463
- US-A- 5 015 073
- SUBMARINE PERISCOPE MANUAL, NAVPERS 16165. WW II US SUBMARINE TECHNOLOGY, CHAPTER 4Q, 4R, [Online] pages 161 - 191, XP002986643 Retrieved from the Internet: <URL:http://web.archive.org/web/20010101-20 020711re_/http://www.maritime.org./fleetsub /pscope/chap4e.htm#4Q> [retrieved on 2003-09-15]

## Description

The present invention relates to an optical device comprising an optical instrument, such as, for example, telescope, periscope or sights, with an entry opening and an exit opening and with optical components, such as mirrors, lenses, prisms and the like, arranged between these openings, by means of which a beam path is created from the outside of the entry opening to the outside of the exit opening where an operator's eye can be positioned to look through the instrument, which device is equipped with an optical filter for restricting the components of light.

A problem with optical instruments of the type exemplified above is that bright light, such as, for example, sunlight and light reflected from the surface of snow, ice or water, limits the use of the instrument. If the bright light enters the instrument, the user is dazzled. According to known technology, in order to prevent the user from being dazzled by the bright light, the optical instrument can be provided with optical filters that attenuate the incident light. A conventional so-called sun filter limits the transmission within the wavelength range for light. Such transmission-limiting filters can, with known designs, be placed directly in association with the entry or exit opening of the optical instrument or inside the optical instrument.

In the known designs, the filter is integrated with the optical instrument. Where an optical instrument without integrated filter needs to be supplemented by a sun filter, a redesign of the instrument is required if the instrument's transmission function is not to be changed. In general, it is the case for the known designs that it is time-consuming and expensive to incorporate a filter function at a later date. The freedom of the designer is limited. An internal filter design is often bulky and accordingly difficult. to incorporate at a later date. There are often demands for high tolerance of environmental extremes. In order to fulfil demands for prevention of the ingress of air and moisture, bushes should be avoided. For optical instruments that are to work in association with military activity, high demands are made concerning, among other things, tolerance of environmental extremes.

A plurality of factors, such as the angle of incidence of the light, the wavelength of the light and the brightness of the light, are decisive for the user's need to attenuate the incident light. In this respect, the optimal solution is to provide the optical instrument with a filter that has continually adjustable transmittance (T) in the range 0 ∼ T ∼ 100%. However, each system component that is introduced into the beam path introduces unwanted losses as a result of reflections, absorption, stray light and the like. High demands of the transmission capabilities of the optical device in combination with a wide transmittance range for the filter make the optical device complicated and expensive.

Document US 3,277,888 discloses an orthoptic device having a movable rest for the forehead, said rest attached to a holder for filters.

The object of the present invention is to achieve an optical device comprising a known optical instrument provided with filter function, which optical device meets the requirements that it can easily by redesigned and has a high tolerance of environmental extremes.

The object of the invention is achieved by means of an optical instrument comprising all the features recited in claim 1.

By arranging a holder with filter separate from the optical instrument, there is no adverse effect on the optical instrument's tolerance of environmental extremes. The designer's freedom increases, as he can work freely with the space on the outside of the exit opening. The designer has great freedom to introduce different types of filter and changes can be carried out easily between different types of filter. As a result of the modular construction of the optical device, it is simple to upgrade the optical instrument with regard to the filter function. Dependent claims define additional embodiments.

According to an advantageous embodiment, the holder is arranged to be supported by a structure surrounding the optical instrument. Such mounting
of the holder is relatively simple to achieve, while at the same time, as far as position is concerned, the holder with associated filter can be connected directly to the optical device and its optical instruments.

According to a more specific embodiment, the holder is arranged to be supported by a rest for the operator's forehead. By means of the arrangement, rays in the beam path from the optical instrument reach the operator via the holder with filter and the forehead rest in a well defined way.

The holder can be designed to move filters In and out of the beam path by means of a lateral translation and/or rotation movement. According to a preferred embodiment f in this connection the holder comprises a carousel arrangement with room for a plurality of filters that can be introduced into the beam path on the exit side of the optical instrument by rotating the carousel arrangement. The arrangement makes it possible to change filter functions manually in a quick and simple way.

According to another preferred embodiment, the holder comprises filters that have transmission characteristics that can be adjusted and the holder comprises accordingly means for the adjustment of the transmission characteristics of the incorporated filters. Examples of different types of filters with adjustable transmission characteristics are given later in the description.

According to yet another preferred embodiment, at least one incorporated filter is designed with varying transmission characteristics within the visual range of the filter. By introducing a filter that has transmission characteristics that can be varied within the filter's visual range, bright fields, for example, sky background, can be attenuated in the image.

The invention will be described below in greater detail with reference to the attached drawings, in which:
Figure 1 shows schematically a first example of a known optical device with filter function.
Figure 2 shows schematically a second example of a known optical device with filter function.
Figure 3 shows schematically a third example of a known optical device with filter function.
Figure 4 shows schematically an example of an optical device according to the invention with filter function.
Figure 5 shows in more detail an example of a filter arrangement on the exit side of an optical device according to the invention with a filter holder supported by a forehead rest.
Figures 6a and 6b show the forehead rest according to

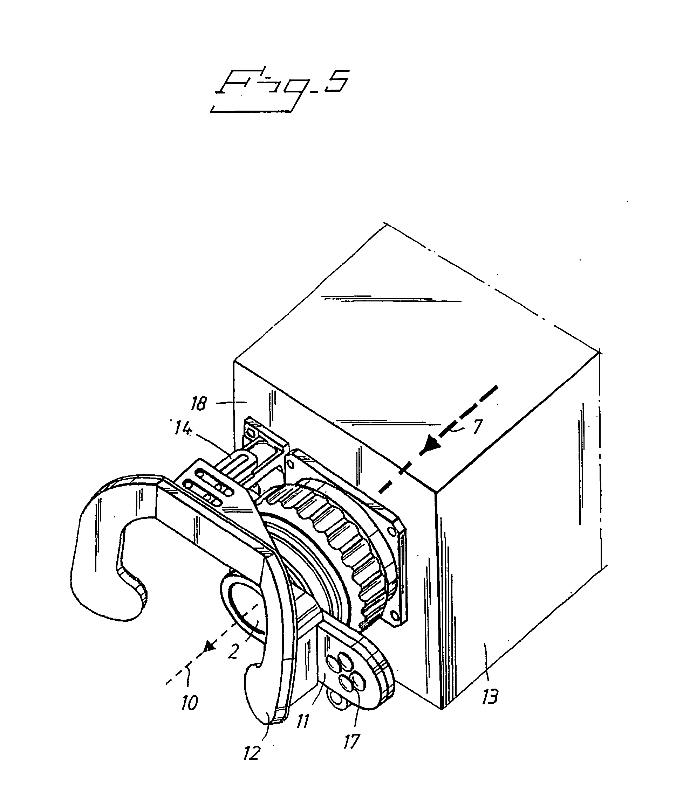

Figure 5 with the filter holder in two different positions.

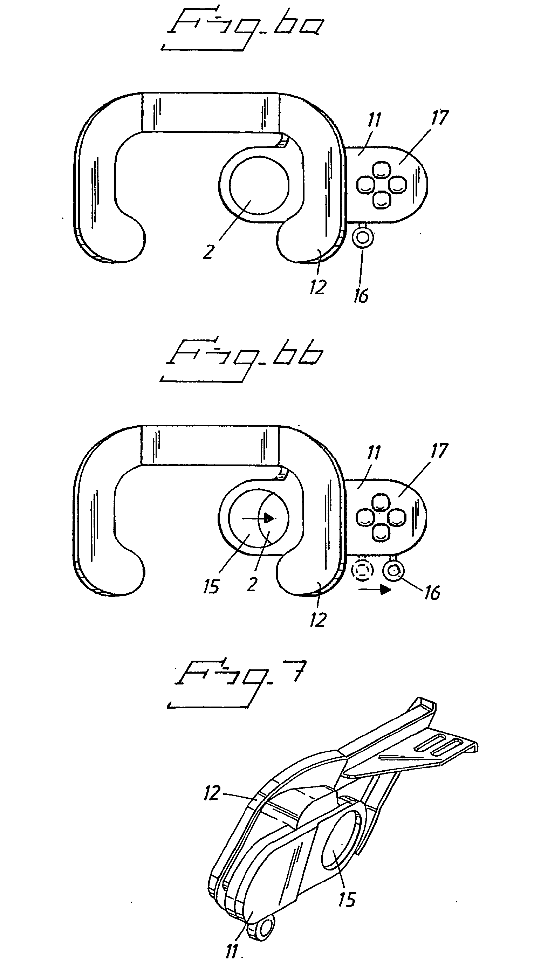

Figure 7 shows a perspective view diagonally from the back of the forehead rest according to Figures 5, 6a and 6b.

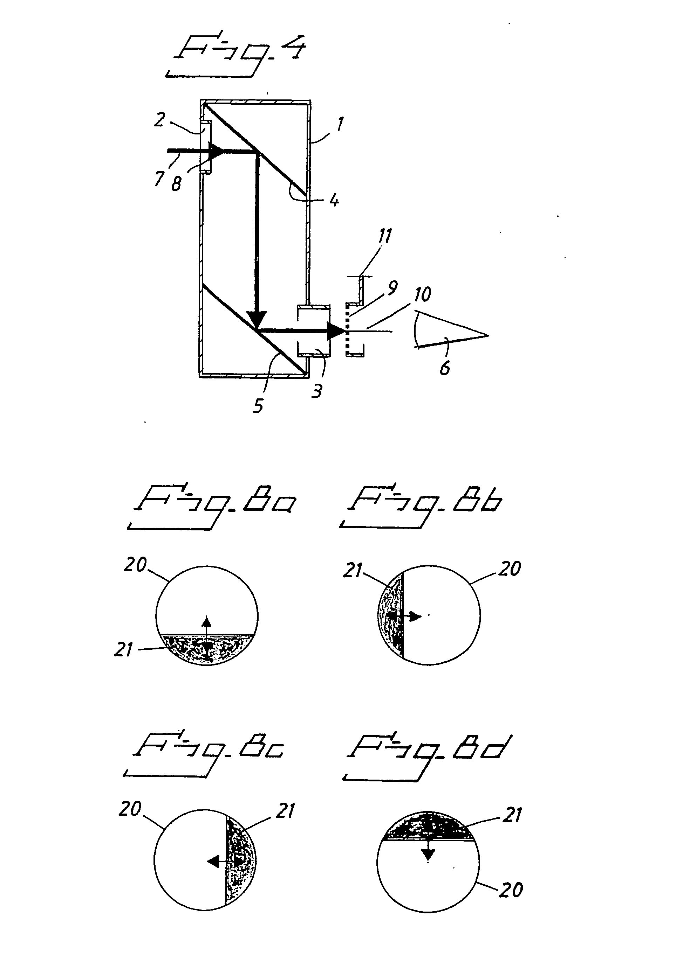

Figures 8a-8d show examples of the attenuation created in the optical device according to the invention.

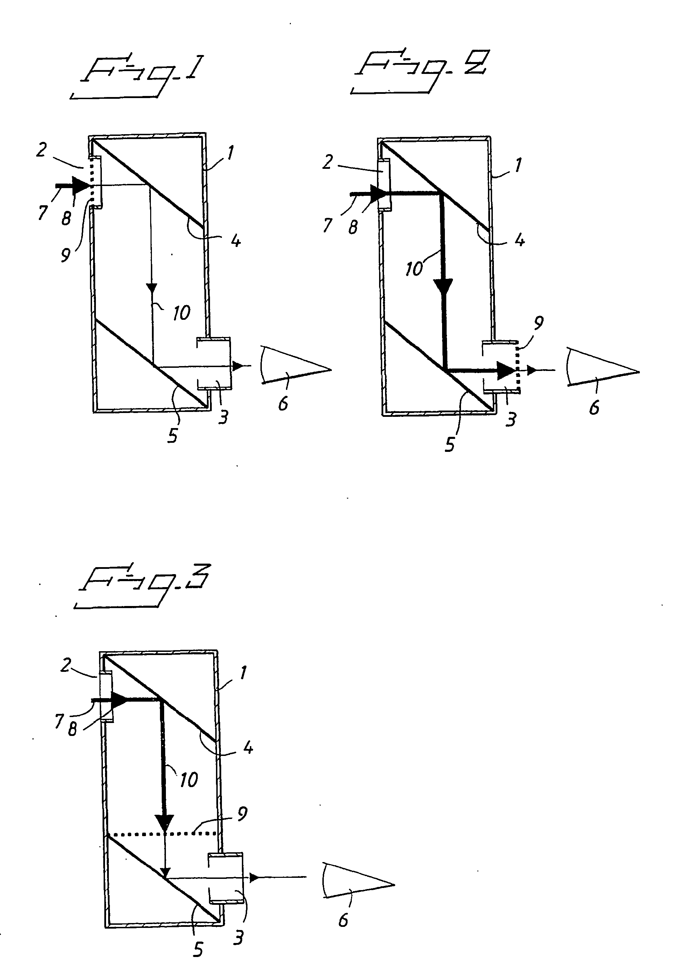

With reference to Figures 1-3, three known optical devices with filter function will first be described. The optical devices comprise an optical instrument 1. This optical instrument can consist of a telescope, a periscope, sights or the like. The instrument 1 has an entry opening 2 and an exit opening 3. Between the entry opening 2 and the exit opening 3 there are a number of optical components, for the sake of simplicity exemplified here by a few components, namely a first mirror 4 and a second mirror 5. Examples of additional components that can be incorporated are lenses, prisms and additional mirrors. An operator's eye is shown schematically in the beam path on the exit side of the instrument 1 and has been given the reference numeral 6. Light incident on the entry side of the instrument is illustrated by a bold-typeface beam 7 with an arrow 8 indicating the direction.

According to the known device in Figure 1, a filter 9 is arranged in association with the entry opening 2 of the instrument 1. The filter 9 attenuates the incident light and this is illustrated by a normal-typeface beam 10 after the beam has passed through the filter. The attenuated beam 10 reaches the exit side of the instrument and then the operator's eye 6 via the exit opening 3, after being reflected in the first and second mirror 4 and 5.

According to the known device in Figure 2, the filter 9 is arranged in association with the exit opening 3 of instrument. In this case, the incident light is first attenuated in association with the exit opening 3, which is illustrated by the incident light changing from a bold-typeface beam 7 to a normal-typeface beam 10 at the exit opening.

In the known device shown in Figure 3, the filter 9 is arranged between the first and second mirrors 4 and 5 and consequently the incident light is illustrated as a bold-typeface beam 7 that changes to a normal-typeface beam 10 between the mirrors 4 and 5.

It is common to the illustrated known devices that the filter is integrated with the optical instrument 1. In the event that there is a desire to upgrade the filter function or to provide an optical instrument that does not have a filter function with such a filter function, extensive redesigning of the optical instruments is normally required.

Figure 4 shows schematically a device according to the invention where the introduction of filtering can be carried out while at the same time the optical instrument can be kept essentially intact. The optical instrument 1 that is incorporated in the optical device conforms in principle to the optical instruments that have been described with reference to Figures 1-3, apart from the filter function. The optical instrument 1 thus comprises an entry opening 2 and an exit opening 3. Between the entry opening and the exit opening there is a first and a second mirror 4 and 5. An operator's eye 6 in the beam path on the exit side of the instrument receives incident light illustrated by a bold-typeface beam 7 that is not attenuated until it passes through a filter 9 arranged separated from and on the exit side of the instrument by means of a holder 11. The holder is shown very schematically in Figure 4, but is designed in a suitable way in order to introduce a filter function into the beam path. For this purpose, a filter can be introduced into the beam path by means of a lateral translation movement in a plane across the beam path. Alternatively, the filter can be introduced by means of a rotation movement in a plane across the beam path. According to a possible design, a carousel-like construction is introduced, where a plurality of filters arranged around the centre of the carousel can be introduced into the beam path of the optical device one at a time by rotating the carousel. The holder 11 can also be designed to allow a movement of incorporated filters 9 towards or away from the exit opening 3.

With reference to Figures 5-7, an optical device according to the invention will now be described, comprising a forehead rest 12 that supports a holder 11 for a filter 2. The forehead rest 12 is supported by a structure 13 that surrounds the optical instrument (not shown here). A mechanical coupling arrangement 14 allows the forehead rest to be moved sideways, up and down, and nearer or further, relative to the attachment surface 18 in the optical instrument's structure. The holder 11 comprises an opening 15 in which a filter 2 can be inserted by means of a sideways movement of a lever 16. In Figure 6a, the filter 2 is shown inserted in the opening 15, while Figure 6b shows a situation when the filter 2 is being moved sideways away from the opening 15. The filter 2 can be moved away from the opening 15 completely, and the space between the user's eye(s) and the exit opening 3 or the eyepiece of the optical instrument thereby consists of air. The holder 11 comprises, in addition, a control panel 17 for adjusting the filter's transmission characteristics. In the embodiment shown, the control panel is provided with buttons. Another possible alternative is to introduce turn potentiometers. A suitable filter can consist of an LCD display. To provide a power supply for electro-optical filters, a voltage source (not shown) in the form of a battery is incorporated in the holder 11.

In a filter design without electronic components, the battery can be omitted. An example of such a design is to use two linear polarizers that can be rotated in relation to each other. The transmission T can then be adjusted between 0 ≤ T ≤ 50%. In order to adjust the transmission, the polarizers' movements can be controlled by means of thumbwheels.

A plurality of known types of filter can be considered for use and, in particular, we can mention sun filters that are based on:
- Display technology such as electrochromic technology, LCD technology or the like.
- Electrochromic technology, LCD technology in combination with optical fixed filters and/or polarizers.
- Fixed optical filters such as polarizers and/or coloured lenses.
- Combinations of the above.

Adjustment of the transmission can be carried out, for example, by means of:
- Changing the voltage across the display, using potentiometers or the like, by means of control electronics.
- Changing the angle of rotation between two or more polarizers, using a thumbwheel or similar device.
- Changing between fixed filters with different transmission characteristics. This can, for example, be realized using the carousel or revolver principle, where the different filters are rotated into the beam path.
- Combinations of what has been proposed above in the last three points.

What has been described above has concerned principally filters for attenuating sunlight. There can, however, be a need to attenuate other light, such as for example light from lasers, and the optical device according to the invention is also suitable for use in such situations.

Figures 8a-8d illustrate examples of how the transmission through the filter can be adjusted for selected parts of the area of the filter. When a large field in the image is bright, for example the sky, and another large field is darker, that is the image has high contrast, it can be advantageous to be able to attenuate the light more in certain parts of the field than others. By introducing an adjustment of the transmission for selected parts of the area of the filter, the optical device according to the invention can introduce such attenuation. In Figures 8a-8d, the circles 20 represent the field of vision of the optical device. The grey fields 21 show how parts of the field of vision are attenuated. The attenuated parts relate to covered bright areas and according to the example in Figure 8d, attenuation is achieved of the sky as a background. The example in Figure 8a can, for example, be considered to attenuate sunlight that is reflected in a surface of water. Even though none of the four examples illustrated shows attenuation in the central parts of the area of the circle, this possibility is not excluded, it being fully possible to insert a strip through the central parts of the area of the circle.

For filters with electronic display technology, the attenuation of the transmission for limited fields of the filter's active area can be realized by activating parts of the surface of the electrical display. Alternatively, in a mechanical version, a shutter can be introduced into the field of vision.

The invention is not limited to the embodiments described above by way of example, but can be modified within the framework of the following patent claims.

## Claims

1. Optical device comprising an optical instrument (1), such as, for example, telescope, periscope or sights, with an entry opening (2) and an exit opening (3) and with optical components (4), (5); such as mirrors, lenses, prisms and the like, arranged between these openings, by means of which a beam path is created from the outside of the entry opening (2) to the outside of the exit opening (3) which device is equipped with an optical filter (2) for restricting the components of light, a holder (11) being arranged on the exit side of the optical instrument (1) separated from the exit opening (3) and designed to hold and move one or more filters in and out of the beam path between the exit opening (3) and the location of an operator's eye (6) **characterized in that** said entry opening is facing an outside of the optical instrument (1) so that an operator's eye (6) can be positioned to look through the instrument (1) and that the holder (11) is arranged to be supported by a rest (12) for the operator's forehead, wherein a mechanical coupling arrangement (14) is arranged to allow the forehead rest (12) to be moved sideways, up and down, and nearer or further, relative to an attachment surface in the optical instrument's structure.

2. Optical device according to claim 1, **characterized in that** the holder is arranged to move the said filters in and out of the beam path by means of a lateral translation and/or rotation movement in a plane across the beam path.

3. Optical device according to Claim 2, **characterized in that** the holder comprises a carousel arrangement with room for a plurality of filters that can be introduced into the beam path on the exit side of the optical instrument by rotating the carousel arrangement.

4. Optical device according to any one of the preceding claims, **characterized in that** the holder comprises means for the adjustment of the transmission characteristics of the said filters.

5. Optical device according to any one of the preceding claims, **characterized in that** at least one incorporated filter is designed with varying transmission characteristics within the visual range of the filter.

## Patentansprüche

1. Optische Vorrichtung mit einem optischen Instrument (1), wie einem Teleskop, einem Periskop oder einem Diopter, mit einer Eintrittsöffnung (2) und einer Austrittsöffnung (3) und mit optischen Elementen (4, 5), wie Spiegeln, Linsen, Prismen und Ähnlichem, die zwischen diesen Öffnungen angeordnet sind, mittels welchen ein Strahlengang von dem Äußeren der Eintrittsöffnung (2) zu dem Äußeren der Austrittsöffnung (3) erzeugt wird, wobei die Vorrichtung mit einem optischen Filter (2) zum Begrenzen der Komponenten von Licht ausgestattet ist, wobei ein Halter (11) an der Austrittsseite des optischen Instruments (1) angeordnet ist, die von der Austrittsöffnung (3) getrennt ist, und so gestaltet ist, dass er einen oder mehrere Filter hält und in oder aus dem Strahlengang zwischen der Austrittsöffnung (3) und der Stelle eines Auges des Benutzers (6) bewegt; **dadurch gekennzeichnet, dass** die Eintrittsöffnung (2) einem Äußeren des optischen Instruments (1) derart gegenüberliegt, dass ein Auge des Benutzers (6) so positioniert werden kann, dass er durch das Instrument (1) sieht und dass der Halter (11) so angeordnet ist, dass er durch eine Auflage (12) für die Stirn des Benutzers getragen wird, wobei eine mechanische Kopplungsanordnung (14) so angeordnet ist, dass die Stirnauflage (12) seitlich, nach oben und nach unten und näher oder weiter relativ zu einer Anbringoberfläche in dem Aufbau des optischen Instruments bewegt werden kann.

2. Optische Vorrichtung nach Anspruch 1, **dadurch gekennzeichnet, dass** der Halter so angeordnet ist, dass die Filter in den Strahlengang und aus dem Strahlengang mittels einer seitlichen Verschiebung und/oder einer Rotationsbewegung in einer Ebene über den Strahlengang bewegt werden.

3. Optische Vorrichtung nach Anspruch 2, **dadurch gekennzeichnet, dass** der Halter eine Drehtisch-Anordnung mit Raum für mehrere Filter ist, die in den Strahlengang an der Austrittsseite des optischen Instruments durch Rotieren der Drehtisch-Anordnung eingeführt werden können.

4. Optische Vorrichtung nach einem der vorhergehenden Ansprüche, **dadurch gekennzeichnet, dass** der Halter Mittel zur Einstellung der Transmissionseigenschaften der Filter aufweist.

5. Optische Vorrichtung nach einem der vorhergehenden Ansprüche, **dadurch gekennzeichnet, dass** zumindest ein eingebauter Filter mit variierenden Transmissionseigenschaften innerhalb des sichtbaren Bereichs des Filter gestaltet ist.

## Revendications

1. Dispositif optique comprenant un instrument optique (1), tel que, par exemple, un télescope, un périscope ou un viseur, pourvu d'une ouverture d'entrée (2) et d'une ouverture de sortie (3) et de composants optiques (4), (5), tels que des miroirs, des lentilles, des prismes et autres, agencés entre ces ouvertures, grâce auxquels un chemin de faisceau est créé de l'extérieur de l'ouverture d'entrée (2) à l'extérieur de l'ouverture de sortie (3), ledit dispositif étant équipé d'un filtre optique (2) servant à limiter les composantes de la lumière, d'un support (11) agencé sur le côté sortie de l'instrument optique (1) à l'écart de l'ouverture de sortie (3) et conçu pour maintenir et pour déplacer un ou plusieurs filtres dans le chemin de faisceau et hors de celui-ci entre l'ouverture de sortie (3) et l'emplacement de l'oeil (6) d'un opérateur, **caractérisé en ce que** ladite ouverture d'entrée (2) est tournée vers un extérieur de l'instrument optique (1) de sorte que l'oeil (6) de l'opérateur puisse être positionné pour regarder à travers l'instrument (1) et **en ce que** le support (11) est agencé pour être supporté par un élément d'appui (12) destiné au front de l'opérateur, dans lequel un aménagement d'accouplement mécanique (14) est conçu pour permettre à l'élément d'appui (12) destiné au front d'être déplacé sur le côté, vers le haut et vers le bas, et plus près ou plus loin, par rapport à une surface de fixation de la structure de l'instrument optique.

2. Dispositif optique selon la revendication 1, **caractérisé en ce que** le support est conçu pour déplacer lesdits filtres dans le chemin de faisceau et hors de celui-ci par le biais d'un déplacement latéral et/ou d'un mouvement de rotation dans un plan sur le chemin de faisceau.

3. Dispositif optique selon la revendication 2, **caractérisé en ce que** le support comprend un élément tournant pourvu d'une chambre destinée à une pluralité de filtres qui peuvent être introduits dans le chemin de faisceau sur le côté sortie de l'instrument optique par la rotation de l'élément tournant.

4. Dispositif optique selon l'une quelconque des revendications précédentes, **caractérisé en ce que** le support comprend un moyen destiné à l'ajustement des caractéristiques de transmission desdits filtres.

5. Dispositif optique selon l'une quelconque des revendications précédentes, **caractérisé en ce qu'**au moins un filtre incorporé présente des caractéristiques de transmission variables dans le champ visuel du filtre.
